# EUROPÄISCHE PATENTSCHRIFT

(11) **EP 1 053 145 B1**
(45) Veröffentlichungstag und Bekanntmachung des Hinweises auf die Patenterteilung: **19.10.2005**
(21) Anmeldenummer: 99955749.9
(22) Anmeldetag: 21.09.1999
(51) Int. Cl.: B60S 1/38, B60S 1/40

(54) **WISCHBLATT FÜR SCHEIBEN VON KRAFTFAHRZEUGEN**
WIPER BLADE FOR WINDOW PANES OF MOTOR VEHICLES
RACLETTE D'ESSUIE-GLACE POUR DES VITRES DE VEHICULES AUTOMOBILES

(30) Priorität: 07.12.1998 DE 19856300
(43) Veröffentlichungstag der Anmeldung: 22.11.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/003015
(87) Internationale Veröffentlichungsnummer: WO 2000/034090

(56) Entgegenhaltungen:
- DE-A- 1 430 589
- DE-A- 1 505 397
- DE-A- 19 627 115
- GB-A- 1 429 820

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird (DE - OS 15 05 397).

Die Erfindung geht aus von einem Wischblatt nach dem Oberbegriff des Anspruchs 1. Ein bekanntes Wischblatt dieser Art (DE 196 27 115.0 Al) muß mit einer separaten Windabweisleiste, einem sogenannten Spoiler versehen werden, wenn die bei höheren Fahrgeschwindigkeiten auftretenden Abhebebestrebungen des Wischblatts von der Scheibe vermieden werden sollen. Wenn diese Windabweisleiste an der von der Scheibe abgewandten Seite des Tragelements angeordnet werden soll können sich Schwierigkeiten beim Austauschen der abgenutzten Wischleiste ergeben, zumindest dann, wenn dieser Austausch vom Endverbraucher des Wischblatts vorgenommen wird. Dieser Vorgang erfordert nämlich neben dem Austausch der Wischleiste weitere Montagearbeit hinsichtlich der Windabweisleiste.

### Vorteile der Erfindung

Bei dem erfindungsgemäßen Wischblatt mit den kennzeichneten Merkmalen des Anspruchs 1 ist es möglich diese Windabweisleiste besonders kostengünstig einstückig an die Wischleiste anzuformen, wobei die Aussparungen eine unauffällige und problemlose Plazierung der Halter ermöglichen. Besondere Montageschritte bezüglich der Windabweisleiste entfallen. Durch die Anpassung des Außenprofils des Halters an das Profil der Windabweisleiste bleibt diese über ihre gesamte Länge wirksam, weil keine die Auflagekraftverteilung beeinträchtigenden Lücken verbleiben. Auch werden an den Aussparungen entstehende Kanten durch den Halter abgedeckt, welche zu einer unerwünschten Verstärkung der am Wischblatt entstehenden Windgeräusche führen können.

Damit beim Umgang mit dem Wischblatt die Gefahr der Verletzung durch die scharfkantigen Enden der Längsschienen vermieden wird, ist zumindest ein Halter am einem Ende des Tragelements angeordnet und mit Mitteln zum Abdecken der Endkanten der Längsschienen versehen.

Zum Anschließen des Wischblatts an einen angetriebenen Wischerarm ist der Halter im Längs- Mittelabschnitt des Tragelements angeordnet und mit Mitteln zum Anschließen eines solchen Wischerarms versehen.

Bei besonders langen Wischblättern hat es sich als vorteilhaft erwiesen, wenn zwischen dem im LängsMittelabschnitt und dem am Ende des Tragelements angeordneten Halter zumindest ein weiterer Halter angeordnet ist, weil dadurch ein Herausspringen eines Längsschienen-Teilabschnitts aus.seiner Längsnut und die damit verbundene Minderung der Wischqualität vermieden wird.

Eine einfache Sicherung der Längsschienen in ihren Längsnuten ist erreicht, wenn jeder Halter mit wenigstens einem krallenartigen Ansatz je eine der beiden Längsschienen umgreift.

Damit der Halter die während des Betriebs des Wischblatts erforderliche Stabilität erlangt ist die nutartige Aussparung in der Windabweisleiste von einem den Ansatz aufweisenden Körper des Halters ausgefüllt.

Um eine gefälliges Aussehen des Wischblatts zu erreichen ist, in dessen Längserstreckung gesehen, die Länge des Halters auf die Breite der nutartigen Aussparung abgestimmt.

Weil im Laufe der Zeit das Material der Wischleiste und das der mit dieser einstückig verbundenen Windabweisleiste altert, was mit einer gewissen Schrumpfung verbunden ist, können sich zwischen den Haltern und den diesen zugewandten Stirnflächen der Windabweisleisten-Abschnitte Luftspalte - ergeben, die zu den schon erwähnten Nachteilen hinsichtlich der Optik und der Geräuschverstärkung führen. Dies kann gemäß einer Weiterbildung der Erfindung dadurch verhindert werden, daß der Halter mit einer sich in Längsrichtung des Wischblatts erstreckenden Wand versehen ist, welche einen der Aussparung benachbarten Randbereich der Windabweisleiste an der von einer an der Windabweisleiste vorhandenen, von der Anströmfläche abgewandten Rückwand überdeckt.

Eine andere Möglichkeit den oben erwähnten Mangel zu vermeiden ergibt sich, wenn der Körper des Halters an seiner der Aussparungswand der Windabweisleiste zugewandten Stirnseite mit einer Ausnehmung versehen ist, in welche die Windabweisleiste mit einem Endstück eintaucht.

Zweckmäßig ist der Halter aus einem Kunststoff gefertigt.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

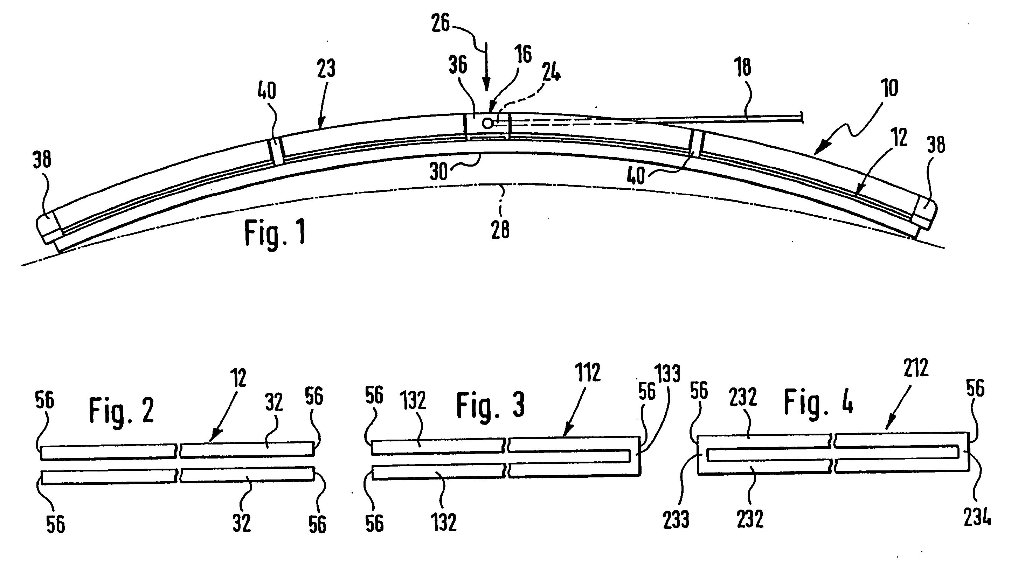

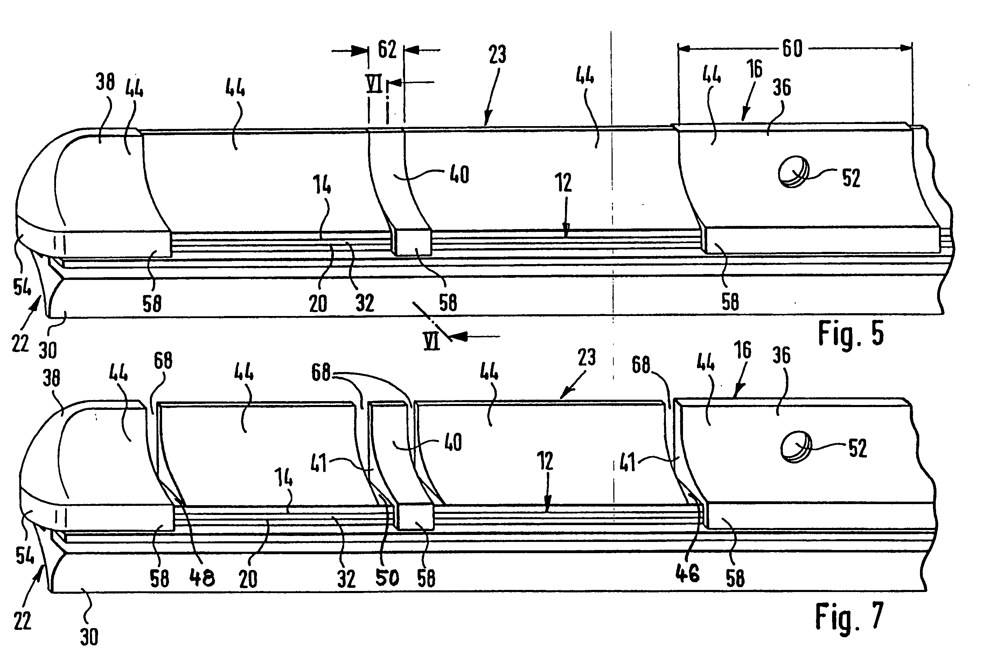

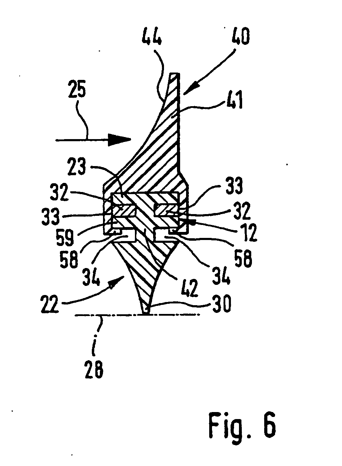

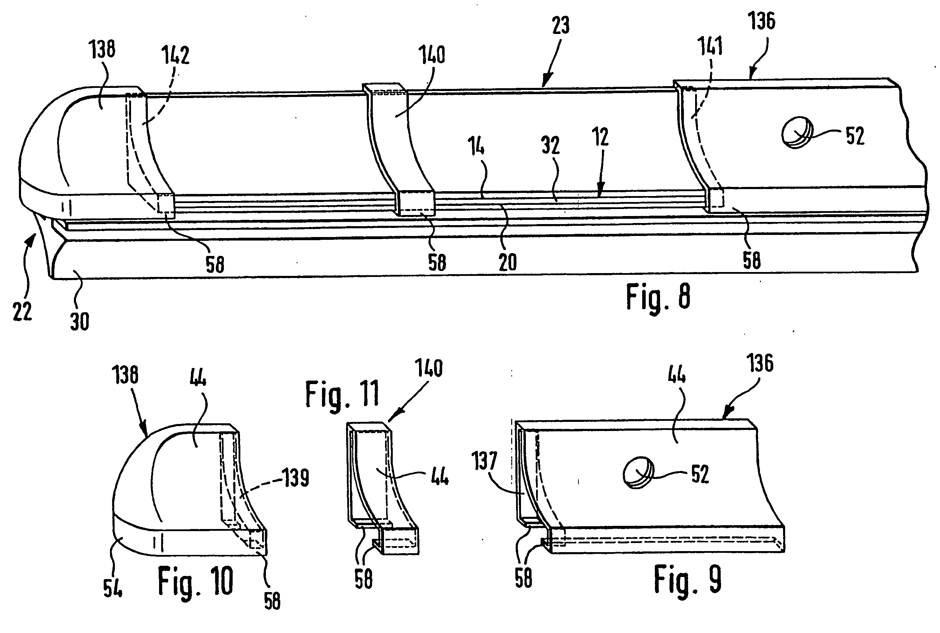

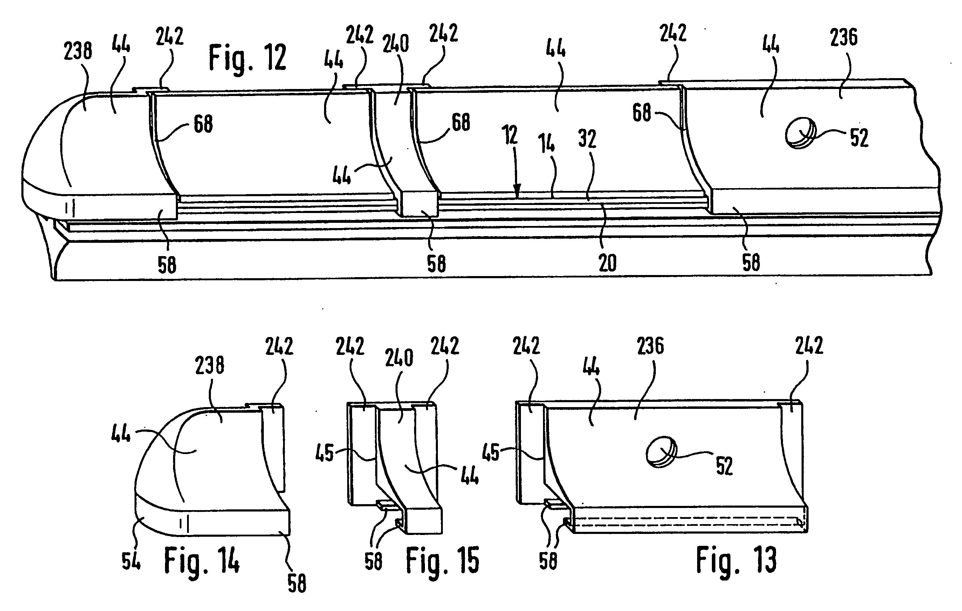

In der Zeichnung zeigen: Figur 1 eine Seitenansicht einer ersten Ausführungsform eines erfindungsgemäß ausgebildeten Wischblatts, das an einem angetriebenen Wischerarm angeschlossen ist, Figur 2 bis 4 je eine Draufsicht auf verschieden ausgebildete Wischblatt-Tragelemente, Figur 5 eine etwa halbseitige, vergrößerte, perspektivische Darstellung des Wischblatts gemäß Figur 1, Figur 6 einen Querschnitt durch das Wischblatt gemäß Figur 5 entlang der Linie VI-VI, Figur 7 die Anordnung gemäß Figur 5 nach Alterung der Wischleiste und der zu dieser gehörenden Windabweisleiste, Figur 8 eine andere Ausführungsform des erfindungsgemäßen Wischblatts in einer Darstellung gemäß Figur 5, Figur 9 ein als Anschlußvorrichtung ausgebildeter, zum Wischblatt gemäß Figur 8 gehörender Halter in perspektivischer Darstellung, Figur 10 ein zum Abdecken der Längsschienen - Endkanten ausgebildeter Halter für das Wischblatt gemäß Figur 8, in perspektivischer Darstellung, Figur 11 ein zwischen der Anschlußvorrichtung und den Endkanten der Längsschienen angeordneter Halter für das Wischblatt gemäß Figur 8 in perspektivischer Darstellung, Figur 12 eine Ansicht gemäß Figur 5 einer weiteren Ausführungsform des erfindungsgemäßen Wischblatts, Figur 13 ein als Anschlußvorrichtung ausgebildeter, zum Wischblatt gemäß Figur 12 gehörender Halter in perspektivischer Darstellung, Figur 14 ein zum Abdecken der Längsschienen-Endkanten ausgebildeter Halter für das Wischblatt gemäß Figur 12 in perspektivischer Darstellung und Figur 15 ein zwischen der Anschlußvorrichtung und den Endkanten der Längsschienen angeordneter Halter für das Wischblatt gemäß Figur 12 in perspektivischer Darstellung.

### Beschreibung der Ausführungsbeispiele

Ein in den Figuren 1, 5 und 6 dargestelltes Wischblatt 10 für Scheiben von Kraftfahrzeugen weist ein mehrteiliges, langgestrecktes, federelastisches Tragelement 12 auf, das in Figur 2 separat dargestellt ist. An der von der Scheibe - deren zu wischende Oberfläche mit der Bezugszahl 28 versehen ist - abgewandten Oberseite 14 des Tragelements 12 ist eine Anschlußvorrichtung 16 angeordnet, mit deren Hilfe das Wischblatt 10 mit einem an der Karosserie eines Kraftfahrzeugs geführten Wischerarms 18 lösbar verbunden werden kann. An der der Scheibe zugewandten Unterseite 20 des Tragelements 12 ist eine langgestreckte, gummielastische Wischleiste 22 längsachsenparallel zum Tragelement 12 angeordnet. Das freie Ende 24 des Wischerarms 18 ist mit an sich bekannten Mitteln zum lösbaren Verbinden des Wischblatts mit dem Wischerarm versehen. Entsprechende Gegenanschlußmittel sind an der Anschlußvorrichtung 16 vorhanden. Der zwischen Umkehrlagen bewegbare, angetriebene Wischerarm 18 ist in Richtung des Pfeiles 26 zur zu wischenden Scheibe belastet, deren zu wischende Oberfläche in Figur 1 durch eine strichpunktierte Linie 28 angedeutet ist. Da die strichpunktierte Linie 28 die stärkste Krümmung der Scheibenoberfläche darstellen soll ist klar ersichtlich, daß die Krümmung des mit seinen beiden Enden an der Scheibe anliegenden, jedoch noch unbelasteten Wischblatts 10 stärker ist als die maximale Scheibenkrümmung. Unter dem Anpressdruck (Pfeil 26) legt sich das Wischblatt mit seiner Wischlippe 30 über seine gesamte Länge an der Scheibenoberfläche 28 an. Dabei baut sich im bandartigen federelastischen Tragelement 12 eine Spannung auf, welche für eine ordnungsgemäße Anlage der Wischleiste 22 beziehungsweise der Wischlippe 30 über deren gesamte Länge an der Kraftfahrzeugscheibe sorgt.

Wie die Figuren 2 und 6 verdeutlichen, ist bei dem Wischblatt gemäß den Figuren 1, 5 und 6 das Tragelement 12 durch zwei lose, federelastische Längsschienen 32 gebildet. Es ist jedoch auch denkbar entweder diese beiden Feder-Längsschienen 132 an einem Ende über einen Quersteg 133 mit einander zu verbinden (Figur 3) oder aber an jedem der beiden Enden der Feder- Längsschienen 232 (Figur 4) je einen Quersteg 233, 234 anzuordnen. Hinsichtlich der Erfindung ist lediglich von Bedeutung, daß das vorzugsweise aus Federbandstahl gefertigte Tragelement 12 (Figur 2) bzw. 112 (Figur 3) beziehungsweise das Tragelement 212 gemäß Figur 4 zwei mit Abstand von einander liegende Längsschienen 32 bzw. 132 bzw. 232 aufweist, die zum Tragelement gehören beziehungsweise das Tragelement bilden (Figur 2).

Im Folgenden soll nun auf die besondere Ausgestaltung einer ersten Ausführungsform des erfindungsgemäßen Wischblatts unter Bezugnahme auf die Figuren 5 und 6 der Zeichnung - welche im wesentlichen der Ausführungsform gemäß Figur 1 entspricht - näher eingegangen werden. Insbesondere Figur 6 zeigt, daß die beiden zum Tragelement 12 gehörenden Längsschienen 32 in Längsnuten 34 der Wischleiste 22 liegen, welche sich in einer gemeinsamen, mit Abstand von der zu wischenden Oberfläche der Windschutzscheibe 28 befindlichen Ebene liegen. Die Längsnuten 34 und somit auch die in diesen aufgenommenen Längsschienen 32 befinden sich mit Abstand von einander. Damit diese Längsschienen 32 nicht quer zu ihrer Längserstreckung aus ihren Längsnuten 34 herauswandern können sind diese durch mehrere Halter gesichert, von denen der erste Halter 36 im Längs- Mittelabschnitt des Tragelements 12 angeordnet ist. An jedem der beiden Enden des Tragelements 12 ist ein weiterer, zweiter Halter 38 angeordnet, und jeweils zwischen dem ersten Halter und jedem zweiten Halter 38 ist ein dritter Halter 40 vorgesehen (Figuren 1 und 5). Wie die Figuren 5 bis 7 verdeutlichen, erstreckt sich die Wischleiste 22 über einen zwischen den Längsnuten 34 befindlichen Längssteg 42 auf die von der Scheibe 28 abgewandte Oberseite 14 des Tragelements 12. Dieser sich in Längsrichtung der Wischleiste 22 erstreckende, an den Längssteg 42 anschließende Längsansatz 23 ist als Windabweisleiste ausgebildet, das heißt, daß seine während des Wischbetriebs vorwiegend vom Fahrtwind (Pfeil 25 in Figur 6) angeströmte Seite mit einer Anströmkehle 44 ausgestattet ist. Für die Halter 36, 38 und 40 ist die Wischleiste 22, zu der auch die Windabweisleiste 23 gehört, an ihrer von der Wischlippe 30 abgewandten Seite des Tragelements 12 mit quer zur Längserstreckung der Wischleiste 22 ausgerichteten Aussparungen 46, 48, 50 versehen, von denen die erste Aussparung 46 dem ersten Halter 36, die zweite Aussparung 48 dem zweiten Halter 38 und die dritte Aussparung 50 dem dritten Halter 40 zugeordnet sind. Die Halter 36, 38 und 40 überbrücken den Abstand, mit welchem die beiden äußeren Längskanten 33 der beiden Feder-Längsschienen 32 voneinander angeordnet sind. Dies zeigt insbesondere die Figur 6 anhand eines im Querschnitt dargestellten dritten Halters 40. Die Halter 36 bis 40 weisen im Bereich der Windabweisleiste 23 einen Querschnitt auf, der sich im wesentlichen mit dem Querschnitt der Windabweisleiste 23 deckt. Jeder Halter ist dementsprechend also ebenfalls mit einer Anströmkehle 44 versehen, welche durch den Fahrtwind 25 angeströmt wird. Im Querschnitt gesehen weist also jeder Halter 36 bis 40 im Bereich der Windabweisleiste ein Profil auf, das dem Profil der Windabweisleiste wenigstens annähernd angepaßt ist. Das Profil ist so ausgeformt, daß die Windabweisleiste und damit auch die in den Aussparungen 46, 48 und 50 befindlichen Halter 36, 38 und 40 die von der Windabweisleiste verlangte Verbesserung des Abhebeverhaltens des Wischblatts 10 auch bei hohen Fahrtgeschwindigkeiten erfüllen. Jeder Halter 36, 38, 40 bildet also mit seinem Körper 41 ein Füllstück, welches die dem entsprechenden Halter zugeordnete Aussparung 46 bzw. 48 bzw. 50 ausfüllt. Wie insbesondere die Figuren 1 und 5 zeigen, ist der im Längsmittelabschnitt des Tragelements 12 angeordnete Halter 36 mit Mitteln zum Anschließen des Wischerarms 18 versehen. Beim Ausführungsbeispiel sind diese Mittel durch eine Querbohrung 52 gebildet, in welche beispielsweise ein Gelenkbolzen eingebracht werden kann an dem dann der Wischerarm mit einem Gegengelenkstück angreift. Die beiden Halter 40 die jeweils an einem der Enden des Tragelements 12 angeordnet sind weisen eine Abschlußwand 54 auf, die zum Abdecken der Endkanten 56 der Tragelemente 12 bzw. 112 bzw. 212 dient. Alle Halter 36, 38, 40 sind an der dem Tragelement 12 zugewandten Seite des Haltekörpers 41 miteinander gegenüberliegenden Sicherungskrallen 58 versehen (Figur 6), welche je eine der beiden Längsschienen 32 quer zu deren Längserstreckung an deren voneinander abgewandten Längskanten 33 umgreift. Dabei ist es unerheblich, daß beim Ausführungsbeispiel jede der Längsschienen noch von einem Längsband 59 der Wischleiste 22 beziehungsweise des Längsansatzes 23 abgedeckt ist. Entscheidend alleine ist, daß die Sicherungskrallen 58 die äußeren Längskanten 33 der Federschienen 32 übergreifen und diese in ihren Längsnuten 34 der Wischleiste 22 sichern. Darüber hinaus sorgen die Sicherungskrallen 58 auch für eine ordnungsgemäße Sicherung eines jeden Halters 34, 36, 38 an der Wischleiste 22 und damit auch für eine zuverlässige Positionierung eines jeden Halters am Wischblatt 10. Dabei ist in Längserstreckung des Wischblatts 10 gesehen die Länge 60 des Halters 36 beziehungsweise die Länge 62 der Halter 40 auf die Länge der ihnen zugeordneten nutartigen Aussparungen 46 und 50 abgestimmt.

Es hat sich jedoch gezeigt, daß bei der Verwendung von bestimmten Materialien oder Materialmischungen zur Herstellung der Wischleiste 22 und der dieser einstückig verbundenen Windabweisleiste 23 im Laufe eines Alterungsprozesses eine gewisse Schrumpfung insbesondere in Längsrichtung der Wischleiste 22 eintritt, welche zu Spaltbildungen zwischen den durch die Aussparungen 46, 48, 50 gebildeten Windabweisleisten-Abschnitten und den Halterkörpern 41 führen kann. Eine solche Situation ist in Figur 7 unter Bezugnahme auf das in Figur 5 dargestellte Ausführungsbeispiel der Erfindung aufgezeigt. Dabei sind die Spalten zwischen den Windabweisleisten-Abschnitten und den Halterkörpern 41 mit der Bezugszahl 68 versehen worden. Abgesehen von der störenden Optik eines solchen Wischblatts führen diese Spalten 68 zu erheblichen, unerwünschten Geräuschen am Wischblatt, welche insbesondere bei höheren Fahrgeschwindigkeiten sehr stören.

Um diese Spalten 68 abzudecken, ist - gemäß einem in den Figuren 8 bis 11 dargestellten Ausführungsbeispiel der Erfindung - der Körper des Halters 136 an seiner der Ausparungswand der Windabweisleiste zugewandten Stirnseite mit einer Ausnehmung 137 versehen (Figur 9) in welche die Windabweisleiste 23 mit einem Endstück 141 eintaucht (Figur 8). Eine entsprechende Anordnung ist auch am zweiten Halter 138 vorhanden, der an den Enden der Wischleiste 22 beziehungsweise des Tragelements 12 angeordnet ist. Die der Ausnehmung 137 entsprechende Ausnehmung ist in Figur 10 mit 139 bezeichnet. Figur 8 veranschaulicht auch das Eintauchen des Endstücks 142 in die Ausnehmung 139. Bei dieser Ausführungsform ist der dritte Halter 140 bandähnlich ausgebildet. Er umschlingt die zwischen den beiden Haltern 136 und 138 sich erstreckende, ungeteilte Windabweisleiste. Die Figuren 9 bis 11 zeigen auch die schon erwähnten Sicherungskrallen 58, welche die beiden Längsschienen 32 an deren äußeren Längskanten 33 umgreifen.

Eine weitere Ausführungsform, dargestellt in den Figuren 12 bis 15, zeigt eine andere Möglichkeit zum Abdecken der Spalten 68, welche zwischen den einander zugewandten Stirnflächen des ersten Halters 236 und mit den entsprechenden Flächen der zweiten Halter 238 und der Windabweisleiste beziehungsweise den einander zugewandten Stirnflächen der dritten Halter 240 und den diesen zugewandten Stirnflächen der Windabweisleiste 23 dient. Dazu sind die auf der Rückseite der Anströmkehle 44 befindlichen Rückwände 45 der Halter 236, 238, 240 jeweils an ihren den Aussparungen 46 bzw. 48 bzw. 58 (Fig. 1) benachbarten Randbereichen mit einer Rückwand 242 versehen, welche sich soweit in Längsrichtung des Wischblatts erstreckt, daß in jeder Betriebsposition des Wischblatts 10 eine zuverlässige Abdeckung der Spalten 68 sichergestellt ist.

Allen Ausführungsbeispielen ist gemeinsam, daß das Wischblatt 10 an der der Wischlippe 30 gegenüberliegenden Oberseite des Tragelements 12 mit einer sich in dessen Längsrichtung erstreckenden Windabweisleiste 23 versehen ist, die für jeden der vorzugsweise aus einem Kunststoff gefertigten Halter 36 beziehungsweise 38 beziehungsweise 40 eine Aussparung 46 beziehungsweise 48 beziehungsweise 50 aufweist, welche sich quer zur Längsrichtung des Wischblatts 10 erstreckt, wobei im Querschnitt gesehen das im Bereich der Windabweisleiste 23 befindliche Außenprofil des jeweiligen Halters dem Profil der Windabweisleiste wenigstens annähernd angepaßt ist.

## Patentansprüche

1. Wischblatt (10) für Scheiben von Kraftfahrzeugen, mit einem elastischen, langgestreckten Tragelement, einer Wischleiste (22) und einer Anschluss vorrichtung (16) für einen Wischerarm (18), wobei die Anschluss vorrichtung (16) auf einer Oberseite (14) und die Wischleiste (22) auf einer Unterseite (20) des Tragelements (12) direkt angeordnet sind und die langgestreckte, aus einem flexiblen Material bestehende, an der zu wischenden Scheibe (28) mit einer Wischlippe (30) anlegbaren Wischleiste (22) an ihren Längsseiten einander gegenüberliegende Längsnuten (34) aufweist, in denen mit Abstand voneinander angeordnete Längsschienen (32) des Tragelements (12) liegen, die durch wenigstens einen an der von der Wischlippe (30) abgewandten Seite des Tragelements (12) den Abstand überbrückenden Halter (36, 38) in den Nuten (34) gesichert sind, **dadurch gekennzeichnet, dass** das Wischblatt (10) an der der Wischlippe (30) gegenüberliegenden Seite des Tragelements (12) mit einer sich in dessen Längsrichtung erstreckenden Windabweisleiste (23) versehen ist, die für jeden Halter (36, 38) eine Aussparung (46 bzw. 48) aufweist, welche sich quer zur Längsrichtung des Wischblatts (10) erstreckt wobei im Querschnitt gesehen, das im Bereich der Windabweisleiste (23) befindliche Außenprofil des Halters (36, 38) dem Profil der Windabweisleiste (23) wenigstens annähernd angepasst ist und dass zumindest ein Halter (38) an einem Ende des Tragelements (12) angeordnet und mit Mitteln (54) zum Abdecken der Endkanten (56) der Längsschienen (32) versehen ist.

2. Wischblatt nach Anspruch 1, **dadurch gekennzeichnet, dass** der Halter (36 bzw. 136 bzw. 236) im Längs-. Mittelabschnitt des Tragelements (12) angeordnet und mit Mitteln (52) zum Anschließen eines angetriebenen Wischerarms (18) versehen ist.

3. Wischblatt nach Anspruch 1 oder 2, **dadurch gekennzeichnet, dass** zwischen dem im Längs- Mittelabschnitt und dem am Ende des Tragelements (12) angeordneten Halter (36 beziehungsweise 38) ein weiterer Halter (40) angeordnet ist.

4. Wischblatt nach einem der Ansprüche 1 bis 3, **dadurch gekennzeichnet, dass** jeder Halter (36 beziehungsweise 38 beziehungsweise 40) mit wenigstens einem krallenartigen Ansatz (58) je eine der beiden Längsschienen (32) an deren Längskanten (33) umgreift.

5. Wischblatt nach Anspruch 4, **dadurch gekennzeichnet, dass** die nutartige Aussparung (46 bzw. 48 bzw. 50) in der Windabweisleiste (23) von einem den Ansatz aufweisenden Körper (41) des Halters ausgefüllt ist.

6. Wischblatt nach Anspruch 5, **dadurch gekennzeichnet, dass** in Längserstreckung des Wischblatts (10) gesehen die Länge des Halters (60 bzw. 62) auf die Länge der nutartigen Aussparung (46 bzw. 50) abgestimmt ist.

7. Wischblatt nach Anspruch 6, **dadurch gekennzeichnet, dass** der Halter (236 beziehungsweise 238 beziehungsweise 240) mit einer sich in Längsrichtung des Wischblatts (10) erstreckenden Wand (242) versehen ist, welche einen der Aussparung benachbarten Randbereich der Windabweisleiste (23) an der von einer an der Windabweisleiste vorhandenen, von der Anströmfläche (44) abgewandten Rückwand überdeckt.

8. Wischblatt nach Anspruch 7, **dadurch gekennzeichnet, dass** der Körper (41) des Halters (136 bzw. 138) an seiner der Aussparungswand der Windabweisleiste (23) zugewandten Stirnseite mit einer Ausnehmung (137 beziehungsweise 139) versehen ist, in welche die Windabweisleiste (23) mit einem Endstück (141 bzw. 142) eintaucht.

9. Wischblatt nach einem der Ansprüche 1 bis 8, **dadurch gekennzeichnet, dass** der Halter (36, 38, 40 bzw. 136, 138 140 bzw. 236, 238, 240) aus einem Kunststoff gefertigt ist.

## Claims

1. Wiper blade (10) for window panes of motor vehicles, having an elastic, elongate supporting element, a wiper strip (22) and a connecting device (16) for a wiper arm (18), the connecting device (16) being directly arranged on an upper side (14) and the wiper strip (22) on a lower side (20) of the supporting element (12), and the elongate wiper strip (22), which consists of a flexible material and can be placed with a wiping lip (30) against the window pane (28) to be wiped, has, on its longitudinal sides, mutually opposite longitudinal grooves (34) in which are situated longitudinal rails (32) of the supporting element (12), which rails are arranged at a distance from each other and are secured in the grooves (34) by means of at least one holder (36, 38) spanning the distance on the side of the supporting element (12) which faces away from the wiping lip (30), **characterized in that** the wiper blade (10) is provided on that side of the supporting element (12) which lies opposite the wiping lip (30) with a wind-deflecting strip (23) which extends in the longitudinal direction of the said wiper blade and, for each holder (36, 38), has a cutout (46 or 48) which extends transversely with respect to the longitudinal direction of the wiper blade (10), with, when seen in cross section, the outer profile of the holder (36, 38) which is situated in the region of the wind-deflecting strip (23) being at least approximately matched to the profile of the wind-deflecting strip (23), and **in that** at least one holder (38) is arranged at one end of the supporting element (12) and is provided with means (54) for covering the end edges (56) of the longitudinal rails (32).

2. Wiper blade according to Claim 1, **characterized in that** the holder (36 or 136 or 236) is arranged in the longitudinal central section of the supporting element (12) and is provided with means (52) for connecting a driven wiper arm (18).

3. Wiper blade according to Claim 1 or 2, **characterized in that** a further holder (40) is arranged between the holder (36) arranged in the longitudinal central section and the holder (38) arranged at the end of the supporting element (12).

4. Wiper blade according to one of Claims 1 to 3, **characterized in that** each holder (36 or 38 or 40) engages in each case with at least one claw-like projection (58) around one of the two longitudinal rails (32) at the longitudinal edges (33) thereof.

5. Wiper blade according to Claim 4, **characterized in that** the groove-like cutout (46 or 48 or 50) in the wind-deflecting strip (23) is filled by a body (41) of the holder that has the projection.

6. Wiper blade according to Claim 5, **characterized in that**, as seen in the longitudinal extent of the wiper blade (10), the length of the holder (60 or 62) is matched to the length of the groove-like cutout (46 or 50).

7. Wiper blade according to Claim 6, **characterized in that** the holder (236 or 238 or 240) is provided with a wall (242) which extends in the longitudinal direction of the wiper blade (10) and, at the rear wall which is present on the wind-deflecting strip and faces away from the approach-flow surface (44), covers an edge region of the wind-deflecting strip (23), which region is adjacent to the cutout.

8. Wiper blade according to Claim 7, **characterized in that** the body (41) of the holder (136 or 138) is provided on its end side facing the cutout wall of the wind-deflecting strip (23) with a recess (137 or 139) into which the wind-deflecting strip (23) dips with an end piece (141 or 142).

9. Wiper blade according to one of Claims 1 to 8, **characterized in that** the holder (36, 38, 40 or 136, 138, 140 or 236, 238, 240) is manufactured from a plastic.

## Revendications

1. Balai d'essuie-glace (10) pour des vitres de véhicules automobiles comportant un élément de support élastique allongé, une lame d'essuyage (22) et un dispositif de raccordement (16) pour un bras d'essuie-glace (18), le dispositif de raccordement (16) étant directement installé sur le côté supérieur (14) et la lame d'essuyage (22) sur le côté inférieur (20) de l'élément de support (12) et, la lame d'essuyage (22), allongée, en une matière souple, s'appliquant contre la vitre (28) à essuyer par sa lèvre d'essuyage (30), et ayant des rainures longitudinales (34) en regard, dans ses grands côtés, rainures longitudinales recevant des rails (32) écartés de l'élément de support (12), ces rails étant fixés dans les rainures (34) par au moins un support (36, 38) qui chevauche l'intervalle au niveau du côté de l'élément de support (12) à l'opposé de la lèvre (30),
**caractérisé en ce qu'**
il comporte une barrette déflectrice (23) sur le côté de l'élément de support (12) à l'opposé de la lèvre d'essuyage (30), cette barrette s'étendant dans la direction longitudinale de l'élément de support (12), et pour chaque support (36, 38) elle comporte un dégagement (46, 48) s'étendant transversalement à la direction longitudinale du balai d'essuie-glace (10), et vu en section, le profilé extérieur du support (36, 38) qui se trouve au niveau de la barrette déflectrice (23) est adapté au moins approximativement au profil de cette barrette (23), et
au moins un support (38) est prévu à une extrémité de l'élément de support (12) et comporte des moyens (54) pour couvrir les arêtes d'extrémité (56) des rails longitudinaux (32).

2. Balai d'essuie-glace selon la revendication 1,
**caractérisé en ce que**
le support (36, 136, 236) est prévu dans le segment médian longitudinal de l'élément de support (12) et comporte des moyens (52) pour être relié à un bras d'essuie-glace (18), moteur.

3. Balai d'essuie-glace selon l'une quelconque des revendications 1 ou 2,
**caractérisé par**
un autre support (40) installé entre le support (36, 38), prévu dans le segment longitudinal médian, et l'extrémité de l'élément de support (12).

4. Balai d'essuie-glace selon l'une quelconque des revendications 1 à 3,
**caractérisé en ce que**
chaque support (36, 38, 40) entoure l'arête longitudinale (33) de l'un des deux rails (32) par un prolongement (58) en forme de griffe.

5. Balai d'essuie-glace selon la revendication 4,
**caractérisé par**
un dégagement (46, 48, 50) en forme de rainure réalisé dans la barrette déflectrice (23) occupée par le corps (41) du support comportant le prolongement.

6. Balai d'essuie-glace selon la revendication 5,
**caractérisé en ce que**
vue dans la direction longitudinale du balai (10), la longueur du support (60, 62) est définie en fonction de la longueur du dégagement en forme de rainure (46, 50).

7. Balai d'essuie-glace selon la revendication 6,
**caractérisé en ce que**
le support (236, 238, 240) a une paroi (242) dirigée dans la direction longitudinale du balai d'essuie-glace (10), cette paroi couvrant une zone de bord de la barrette déflectrice (23) voisine du dégagement de la paroi arrière à l'opposée de la surface d'attaque (44) de la barrette.

8. Balai d'essuie-glace selon la revendication 7,
**caractérisé en ce que**
le corps (41) du support (136, 138) comporte au niveau de sa face frontale tournée vers la paroi de dégagement de la barrette déflectrice (23) une cavité (137, 139) dans laquelle pénètre l'extrémité (141, 142) de la barrette déflectrice (23).

9. Balai d'essuie-glace selon l'une quelconque des revendications 1 à 8,
**caractérisé en ce que**
le support (36, 38, 40 ; 136, 138, 140 ; 236, 238, 240) est fabriqué en matière plastique.
